Europäisches Patentamt

European Patent Office

Office européen des brevets

(11) Publication number: **0 038 814**
**B1**

# EUROPEAN PATENT SPECIFICATION

(45) Date of publication of patent specification: **08.05.85**

(51) Int. Cl.⁴: **G 01 G 21/23, E 04 B 5/40**

(21) Application number: **80901974.8**

(22) Date of filing: **15.10.80**

(86) International application number:
**PCT/SE80/00249**

(87) International publication number:
**WO 81/01197 30.04.81 Gazette 81/11**

(54) **WEIGHBRIDGE AND METHOD OF PRODUCING IT.**

(30) Priority: **17.10.79 SE 7908618**

(43) Date of publication of application:
**04.11.81 Bulletin 81/44**

(45) Publication of the grant of the patent:
**08.05.85 Bulletin 85/19**

(84) Designated Contracting States:
**AT CH DE FR GB LI NL**

(56) References cited:
**AU-B-1 296 076**
**CA-A-1 073 935**
**DE-A-1 784 950**
**DE-A-1 935 086**
**DE-A-2 128 957**
**DE-A-2 225 271**
**DE-A-2 701 396**
**DE-C- 810 305**
**SE-B- 368 087**
**SE-B- 407 602**
**US-A-3 727 707**

**ASEA Tdning, Volume 70, No. 4, issued
1978, Västerås, "Handerlsvägar för fordon", see
fig 2, page 103**

(73) Proprietor: **AB BOFORS ELEKTRONIK**
**Box 600**
**S-691 80 Bofors (SE)**

(72) Inventor: **LUNDBORG, Olle Gustaf**
**Grabrödersgatan 6**
**S-211 21 Malmö (SE)**

(74) Representative: **Ström, Tore et al**
**Ström & Gulliksson AB Studentgatan 1**
**P.O. Box 4188**
**S-203 13 Malmö (SE)**

Courier Press, Leamington Spa, England.

## Description

The present invention relates to a weighbridge comprising an oblong weighing platform including a cast concrete layer carried by a pair of beams, which are supported by transducer elements, and a method of producing the weighbridge.

It is already known to manufacture weighbridges from cast concrete or as all-welded steel constructions. The cast weighbridges, which are cast, for example, directly in a weighing pit, therefore require a special mould dimensioned to take up the whole weight of the weighbridge. It is often necessary to carry out a stamping of the mould which is particularly difficult in view of the fact that the weighbridge is cast in a special weighing pit which is not wanted too deep for reasons of cost, which means that the space below the weighbridge is limited. After the setting of the concrete, the mould has to be broken up and removed through a manhole in the weighbridge, which work is time-consuming and therefore expensive. A further expense in connection with casting known weighbridges is that they have to be made with special beam sections adapted to bear against transducer members.

The use of weighbridges consisting of all-welded steel constructions eliminates many of the disadvantages associated with the casting of weighbridges. For various reasons, a welded weighbridge has to be made with great accuracy which means that it is extremely inconvenient to weld the weighbridge together on site in the weighing pit. A finished weighbridge may have dimensions of $3 \times 18$ m, which means that special arrangements have to be made for such a weighbridge to be able to be transported from the place of manufacture. An all-welded weighbridge is nevertheless preferable since its lower weight in comparison with the weight of a cast weighbridge leads to more accurate weighing.

A weighbridge comprising an oblong weighing platform including a cast concrete layer carried by a pair of beams, which are supported by transducer elements is described in SE—B—368 087 (corresponds to DE—A—2 244 912).

The present invention provides a weighbridge and a method of producing it which to a large extent eliminates the problems and disadvantages which exist with known weighbridges. A weighbridge according to the present invention has several of the advantages of a welded weighbridge but none of the disadvantages which are associated with the production of known cast weighbridges. Thus, the object of the present invention is to provide a weighbridge which can easily be produced directly in a weighing pit, which has considerably lower weight in comparison with known cast weighbridges and which, in addition, is cheaper to produce than known weighbridges.

The objects given above are achieved according to the present invention by giving the weighbridge and the method for its production the characteristics given in the patent claims 1 and 9.

By casting the weighbridge directly on a mould, preferably of metal, which mould does not need to be removed after the setting of the concrete and which rests directly against two beams disposed along the long sides of the weighing pit and supported by the transducer members, a comparatively light weighbridge with the necessary strength is obtained. Transverse beams between the longitudinal beams are preferably bolted to thse and at the same time constitute a support for or part of the mould. The mould is bounded by an edge lining which bears with a sealing action against the tops of the beams. The edge lining only needs to be dimensioned to take up the stresses which occur during the casting of the concrete in the mould.

A preferably corrugated or profiled metal sheet is disposed on the beams with a sealing action against the tops of the beams. A plane-profiled metal sheet is preferred since this permits the placing of reinforcing iron in each profiling, while at the same time the volume of concrete can be reduced without detriment to the necessary strength of the weighbridge.

As a result of the fact that the edge lining is bounded at the top by a T-beam, to the web of which there is secured a metal sheet disposed close to the tops of the beams, objects are effectively prevented from becoming wedged between the edge of the weighing platform and the surrounding edges of the weighing pit, adjacent to the weighing platform. An edge lining thus shaped also permits an easy joining at the corner portions of the mould.

Placed between the corrugated metal sheets and the tops of the beams is a seal which is shaped in accordance with the corrugations of the metal sheet with the object of preventing the concrete from leaking out during the casting of the weighing platform. The corrugated metal sheets may appropriately be screwed firmly to the tops of the beams to bring about a compression of the seal.

Part of the weighing platform can be formed as continuous gratings through which grain, for example, can be unloaded for further conveying to a grain conveyor placed under the weighing platform.

The cast concrete portions of the weighing platform may also be given an inclination towards the centre where an opening is situated for water to run away. Directly below the opening in the weighing platform, wells may appropriately be provided in the bottom of the weighing pit which means that the main part of the bottom of the weighing pit can be kept dry.

When the bottom of the mould consists partially of the longitudinal beams and the tops of the transverse beams, it is advisable to fix reinforcing iron to said tops.

With the object of stiffening the edge lining and locating this during the casting of the concrete, spacing elements are welded to the upper portion of the edge lining, that is to say in the T-beam, and in an edge lining at the upper edge portion of the weighing pit. When the concrete has set, these spacing members are removed, whereupon the weighbridge is ready for use.

The invention will now be described with reference to an example of embodiment illustrated in which

FIG. 1 is a perspective view of a finished weighbridge according to the invention,

FIG. 2 is a perspective view similar to FIG. 1, but in which the weighbridge is shown in various stages of production and wherein certain parts are left out for the sake of clarity.

FIG. 3 is a partial section through the finished weighbridge showing its one edge portion set up and cast directly on a longitudinal beam, the arrangement of the profiled metal sheets and their sealing also being shown, and

FIG. 4 shows, in perspective, a portion of the weighing platform with a manhole and drainage hole disposed centrally.

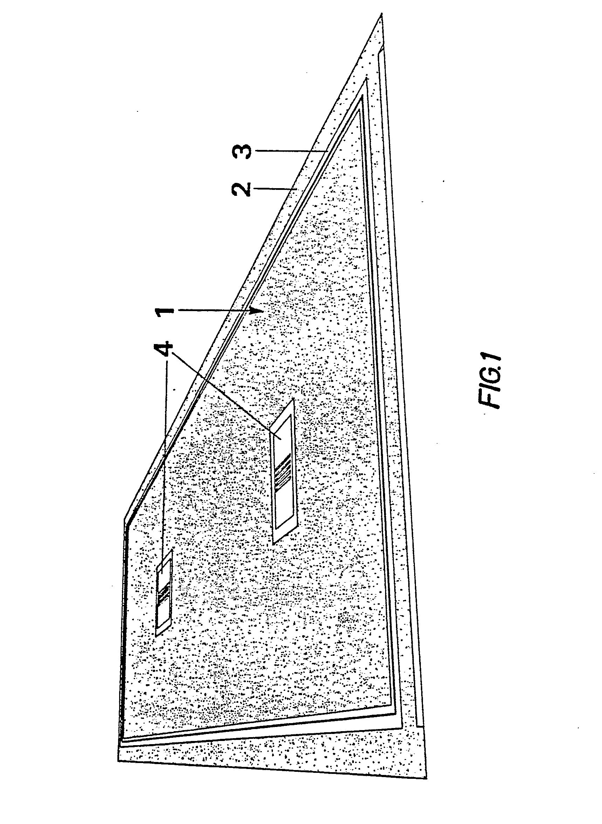

FIG. 1 shows the finished weighbridge 1 in position in a cast weighing pit, the lateral edges 2 of which are closely connected to the edge lining 3 of the weighbridge. The weighbridge shown here has a weighing platform cast in concrete and provided with two centrally situated manhole covers and drainage hole covers 4. The top of the weighing platform has a fall towards the hole covers 4.

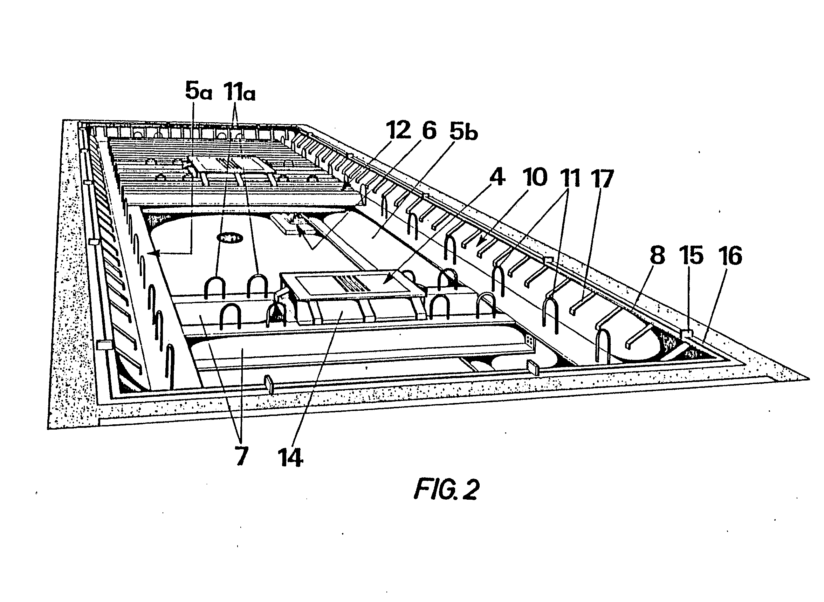

The production of the weighbridge 1 will now be described with reference to FIG. 2. Two longitudinal beams 5a and 5b are first placed in the finished weighing pit and secured in at least four transducer members 6, that is to say at least two transducer members under each longitudinal beam 5. A transverse beam 7 is disposed at least at each short side of the weighing platform and is there bolted to the longitudinal beams 5. For this purpose, the transverse beams 7 are provided with transverse flange plates which are bolted to the webs of the longitudinal beams. The frame formed by the beams 5 and 7 thus constitutes a support for the weighing platform which consists partially of cast portions.

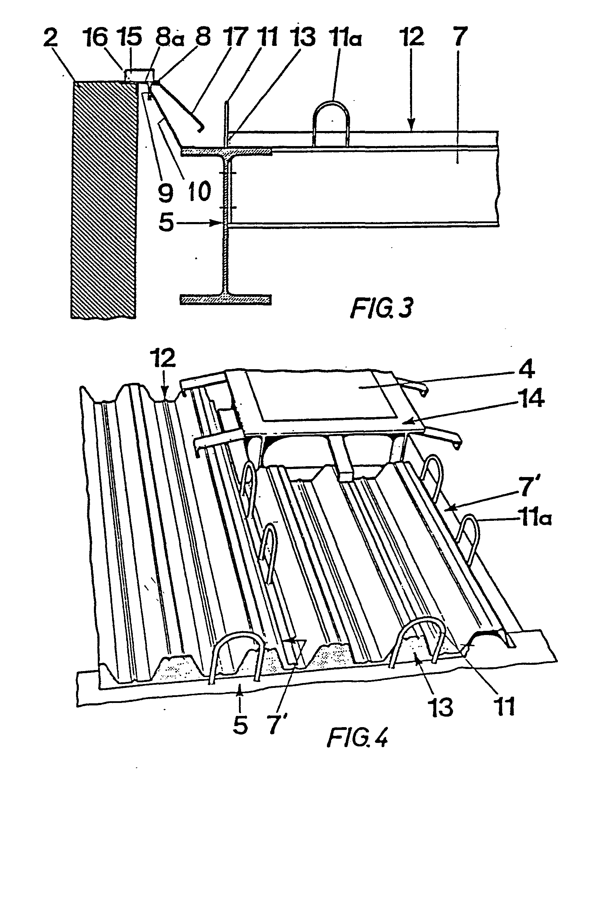

In order to render possible a casting of the weighbridge, an edge lining 3 is disposed round the cast portions of the bridge. FIG. 3 shows an embodiment of the edge lining 3, the upper portion of which consists of a T-beam 8 at the web 9 of which a plate 10 is directed down towards the top of the longitudinal beam 5 and secured to this with a sealing action by screwing or welding. The outer portion 8a of the T-beam eliminates, to a large extent, the risk of objects becoming wedged between the weighbridge and the side wall of the weighing pit, while at the same time the web 9 of the beam forms a drip nose.

Reinforcing irons 11 and 11a are welded to the tops of the longitudinal beams 5 and of the transverse beams 7.

Placed between the longitudinal beams 5 is a plane-profiled metal sheet 12 which sheet forms the bottom of the mould in which the concrete is to be cast to form the weighing platform. A seal 13 is placed between the metal sheet 12 and the tops of the longitudinal beams 5. If necessary, a seal is also placed between the metal sheet 12 and the tops of the transverse beams 7 with the object of creating a sealed mould which prevents leakage of concrete during casting of the weighing platform. Since the metal sheet 12 is not to be removed after the weighbridge has been finished, the metal sheet may appropriately be galvanized.

FIG. 4 shows the installation of a manhole and drainage hole cover 4 in the weighing platform. The hole cover 4 is surrounded by a frame 14 resting against two transverse beams 7', likewise provided with reinforcing iron 11a, which means that the metal sheet 12 is cut off and sealed at the tops of the transverse beams 7'. At the height of the hole cover 4, the metal sheet 12 is disposed resting partially against the longitudinal beams 5 and partially against a lower portion of the frame 14 of the hole.

If a weighbridge is desired with a larger grating opening, for example for grain, the procedure is the same as given above in connection with the hole cover 4.

When the edge lining 3, the metal sheet 12 and possible hole covers 4 have been placed in position and possibly sealed against the tops of the beams 5 and 7, the mould thus formed is ready for filling with concrete. Spacing elements 15 (FIG. 3) locate the upper portion of the edge lining at the upper wall edge 16 of the weighing pit, consisting for example of an angle section, after which the casting can begin after the necessary reinforcement has been inserted in the mould. The upper portion of the edge lining 3 may appropriately be provided with reinforcement 17 to ensure the edge strength of the weighing platform.

The invention is not limited to the example of embodiment shown, but modifications can be made within the scope of the following patent claims.

## Claims

1. A weighbridge comprising an oblong weighing platform including a cast concrete layer carried by a pair of beams (5), which are supported by transducer elements (6) characterized in that said pair of beams (5) are longitudinal beams disposed along the long sides of the weighing platform, in that at least two transverse beams (7) are secured to the longitudinal beams (5) and disposed between them, preferably at the short sides of the weighing platform, in that the bottom of the weighing platform comprises a metal sheet (12), bearing against the longitudinal beams (5), in that the periphery of the weighing platform consists of an edge lining (3, 10) in sheetform bearing downwards against the upper surfaces of the beams (5, 7) and in that the concrete layer of the weighing platform is cast in a mould, substantially formed by said metal sheet (12) and said edge lining (3, 10), the concrete layer thus forming an upper layer of the weighing platform.

2. A weighbridge as claimed in Claim 1 characterized in that the metal sheet (12) is corrugated or profiled.

3. A weighbridge as claimed in claim 1 or 2 characterized in that the edge lining (3, 10) comprises a metal sheet (10) and a T-beam (8), to the web (9) of which the upper edge of the edge lining metal sheet (10) is secured.

4. A weighbridge as claimed in Claim 1 characterized in that the metal sheet (12) forming the bottom of the weighing platform is plane corrugated and in that a seal (13) shaped in accordance with the corrugation of the metal sheet (12) is placed between the corrugated metal sheet (12) and the longitudinal beams (5).

5. A weighbridge as claimed in Claim 4, characterized in that the plane corrugated metal sheet (12) is screwed to the longitudinal beams (5) to bring about a compression of the seal (13).

6. A weighbridge as claimed in any of the preceding claims, characterized in that a through grating is disposed at least at one part of the bridge.

7. A weighbridge as claimed in any of the preceding claims, characterized in tht the cast concrete layer is formed with an inclination in towards the centre, where holes extending through the platform are provised for water to run off.

8. A weighbridge as claimed in any of the preceding claims, characterized in that reinforcing iron members (11, 17) are secured to the upper surfaces of the beams (5, 7) and to the edge lining (3).

9. A method of producing a weighbridge as claimed in Claim 1 characterized
— by placing the two longitudinal beams (5) on transducer members (6);
— by securing at least two transverse beams (7) to said longitudinal beams (5) to extend between them;
— by providing an edge lining (3, 10) on the upper surfaces along the outermost edges of the longitudinal and the outermost transverse beams (5, 7) in sealing co-operation with these surfaces;
— by securing the upper outer portion (8a) of the edge lining to an upper edge of a pit surrounding the weighbridge;
— by placing a metal sheet (12), which is preferably corrugated or profiled, on the upper surfaces of the beams (5, 7) in sealing co-operation with these surfaces so as to cover completely the space between the beams at the locations to which cast concrete is to be applied;
— by casting concrete in the mould formed substantially by the metal sheet (12) and the edge lining (3, 10) and
— by detaching the upper outer portion (8a) of the edge lining from the upper edge of the pit surrounding the weighbridge after the concrete has set.

10. A method as claimed in Claim 9 characterized by inserting reinforcements in said mould before the concrete is cast in the mould.

11. A method as claimed in Claim 9 or 10 characterized in that the transverse beams (7) are bolted to the longitudinal beams (5).

**Patentansprüche**

1. Brückenwaage mit einer länglichen Waageplattform aus einer Gußbetontafel, die von einem Paar auf Meßwertumsetzern (6) gelagerten Balken (5) getragen ist, dadurch gekennzeichnet, daß das Balkenpaar (5) von entlang der Längsseiten der Waageplattform verlaufenden Längsbalken gebildet ist, daß zumindest zwei Querbalken (7) an den Längsbalken (5) befestigt und zwischen diesen vorzugsweise an den Schmalseiten der Waageplattform angeordnet sind, daß der Boden der Waageplattform aus einer aus den Längsbalken (5) aufruhenden Blechtafel (12) besteht, da der Umfangsrand der Waageplattform aus einer Randverkleidung (3, 10) in Tafelform besteht, die sich von oben auf den Oberseiten der Balken (5, 7) abstützt, und daß die Betontafel der Waageplattform in einer im wesentlichen von der Blechtafel (12) und der Randverkleidung (3, 10) gebildeten Schalung gegossen ist und somit eine Deckschicht der Waageplattform bildet.

2. Brückenwaage nach Anspruch 1, dadurch gekennzeichnet, daß die Blechtafel (12) gewellt oder profiliert ist.

3. Brückenwaage nach Anspruch 1 oder 2, dadurch gekennzeichnet, daß die Randverkleidung (3, 10) aus einem Metallblech (10) und einem T-Träger (8) besteht, an dessen Steg (9) der obere Rand das Metallblech (10) der Randverkleidung befestigt ist.

4. Brückenwaage nach Anspruch 1, dadurch gekennzeichnet, daß die den Boden der Waageplattform bildende Blechtafel (12) trapezförmig gewellt ist und daß zwischen der gewellten Blechtafel (12) und den Längsbalken (5) eine entsprechend den Wellungen der Blechtafel (12) geformte Dichtung (13) angeordnet ist.

5. Brückenwaage nach Anspruch 4, dadurch gekennzeichnet, daß die trapezförmig gewellte Blechtafel (12) unter Kompression der Dichtung (13) auf die Längsbalken (5) aufgeschraubt ist.

6. Brückenwaage nach einem der Ansprüche 1 bis 5, dadurch gekennzeichnet, daß zumindest an einem Teil der Brücke ein durchgehender Gitterrost angeordnet ist.

7. Brückenwaage nach einem der Ansprüche 1 bis 6, dadurch gekennzeichnet, daß die Gußbetontafel zur Mitte geneigt ist, wo durch die Plattform verlaufende Löcher zum Wasserablauf vorgesehen sind.

8. Brückenwaage nach einem der Ansprüche 1 bis 7, dadurch gekennzeichnet, daß an der Oberseite der Balken (5, 7) und an der Randverkleidung (3) Bewehrungseisen (11, 17) befestigt sind.

9. Verfahren zur Herstellung der Brückenwaage nach Anspruch 1, gekennzeichnet durch
Auflegen zweier Längsbalken (5) auf Meßwertumsetzer (6);
Befestigen zumindest zweier zwischen den Längsbalken (5) verlaufender Querbalken (7) an den Längsbalken (5);

Anbringen einer Randverkleidung (3, 10) an den Oberseiten entlang der Außenränder der Längsbalken sowie der äußersten Querbalken (5, 7) in dichtendem Zusammenwirken mit diesen Oberseiten;

Befestigen des oberen Außenbereiches (8a) der Randverkleidung am oberen Rand eines die Brückenwaage umgebenden Grabens;

Auflegen einer vorzugsweise gewellten oder profilierten Blechtafel (12) auf die Oberseiten der Balken (5, 7) in dichtendem Zusammenwirken mit diesen Oberseiten, sodaß der Raum zwischen den Balken an den Stellen, denen Gußbeton zuzuführen ist, vollständig abgedeckt ist;

Eingießen von Beton in die im wesentlichen von der Blechtafel (12) und der Randverkleidung (3, 10) gebildete Schalung und

Abnehmen des oberen Außenbereiches (8a) der Randverkleidung vom oberen Rand des die Brückenwaage umgebenden Grabens nach Aushärten des Betons.

10. Verfahren nach Anspruch 9, gekennzeichnet durch Einlegen von Bewehrungen in die Schalung vor dem Eingießen des Betons in die Schalung.

11. Verfahren nach Anspruch 9 oder 10, dadurch gekennzeichnet, daß die Querbalken (7) an die Längsbalken (5) angeschraubt werden.

**Revendications**

1. Pont à bascule comprenant une plate-forme de pesée oblongue renfermant une couche de béton coulée portée par une paire de fléaux (5), lesquels sont supportés par des éléments transducteurs (6), caractérisé en ce que la paire de fléaux (5) sont des fléaux longitudinaux disposés le long des grands côtés de la plate-forme de pesée, en ce que au moins deux fléaux transversaux (7) sont assujettis aux fléaux longitudinaux (5) et disposés entre eux, de préférence sur les petits côtés de la plate-forme de pesée, en ce que le fond de la plate-forme de pesée comprend une tôle métallique (12) portant contre les fléaux longitudinaux (5), en ce que la périphérie de la plate-forme de pesée est constituée d'une bordure (3, 10) en forme de tôle portant vers le bas contre les surfaces supérieures des fléaux (5, 7) et en ce que la couche de béton de la plate-forme de pesée est coulée dans un moule, formé pour l'essentiel par la tôle métallique (12) et la bordure (3, 10), la couche de béton formant la couche supérieure de la plate-forme de pesée.

2. Pont à bascule selon la revendication 1, caractérisé en ce que la tôle métallique (12) est ondulée ou profilée.

3. Pont à bascule selon la revendication 1 ou 2, caractérisé en ce que la bordure (3, 10) comprend une tôle métallique (10) et un rail en forme de T (8), sur l'âme (9) duquel est assujetti le bord supérieur de la tôle métallique faisant bordure (10).

4. Pont à bascule selon la revendication 1, caractérisé en ce que la tôle métallique (12) formant le fond de la plate-forme de pesée est ondulée en plan et en ce qu'un joint (13) conformé aux ondulations de la tôle métallique (12) est placé entre la tôle métallique ondulée (12) et les fléaux longitudinaux (5).

5. Pont à bascule selon la revendication 4, caractérisé en ce que la feuille métallique (12) ondulée en plan est boulonnée sur les fléaux longitudinaux (5) pour causer une compression du joint (13).

6. Pont à bascule selon l'une des revendications précédentes, caractérisé en ce que sur au moins une partie du pont est disposé un treillis.

7. Pont à bascule selon l'une des revendications précédentes, caractérisé en ce que la couche de béton coulée est conformée avec une inclinaison vers le centre, où des ouvertures traversant la plate-forme permettent l'évacuation de l'eau.

8. Pont à bascule selon l'une des revendications précédentes, caractérisé en ce que des fers de renforcement (11, 17) sont assujettis aux surfaces supérieures des fléaux (5, 7) et à la bordure (3).

9. Méthode de production d'un pont à bascule selon la revendication 1, caractérisée en ce que

— on place deux fléaux longitudinaux (5) sur des organes transducteurs (6);

— on assujettit aux fléaux longitudinaux (5) au moins deux fléaux transversaux (7), disposés entre eux;

— on dispose une bordure (3, 10) sur les surfaces supérieures le long des côtés extérieurs des fléaux longitudinaux et transversaux (5, 7), coopérant de façon étanche avec ces surfaces;

— on assujettit la partie extérieure supérieure (8a) de la bordure au bord supérieur de la fosse entourant le pont à bascule;

— on place une tôle métallique (12), qui est de préférence ondulée ou profilée, sur les surfaces supérieures des fléaux (5, 7), coopérant de façon étanche avec ces surfaces de façon à couvrir complètement l'espace entre les fléaux aux endroits où le béton coulé va être appliqué;

— on coule du béton dans le moule formé pour l'essentiel de la tôle métallique (12) et la bordure (3, 10), et

— on détache la partie extérieure supérieure (8a) de la bordure du bord supérieur de la fosse entourant le pont à bascule après que le béton ait été mis en place.

10. Méthode selon la revendication 9, caractérisée en ce qu'avant la coulée du béton dans le moule, on y insère des renforcements.

11. Méthode selon la revendication 9 ou 10, caractérisée en ce que les fléaux transversaux (7) sont boulonnés sur les fléaux longitudinaux (5).

FIG.1

FIG.2

5a 11a

12 6 5b

4 10 11 17

8 15 16

7 14

0 038 814

2  16  15  8a  8  17  11  13  11a  12  7

9  10

5

*FIG. 3*

12

4

14

7'

11a

5  7'

13  11

*FIG. 4*